# EUROPÄISCHE PATENTSCHRIFT

(11) **EP 2 586 610 B1**
(45) Veröffentlichungstag und Bekanntmachung des Hinweises auf die Patenterteilung: **07.05.2014**
(21) Anmeldenummer: 11186834.5
(22) Anmeldetag: 27.10.2011
(51) Int. Cl.: B32B 17/10, B60J 1/00, C03C 17/06, C03C 17/23, H01Q 1/12, H01Q 1/32, H01Q 15/00

(54) **Scheibe mit Hochfrequenz-Transmission**
Sheet with high frequency transmission
Plaque dotée d'une transmission haute fréquence

(43) Veröffentlichungstag der Anmeldung: 01.05.2013
(73) Patentinhaber: Saint-Gobain Glass France, 92400 Courbevoie (FR)
(72) Erfinder: Droste, Stefan, 52134 Herzogenrath (DE); Degen, Christoph, 52072 Aachen (DE); Stelling, Bernd, 52134 Herzogenrath (DE); Rousselet, Noémie, 52062 Aachen (DE)
(74) Vertreter: Lendvai, Tomas

(56) Entgegenhaltungen:
- EP-A1- 0 531 734
- EP-A1- 0 717 459
- WO-A1-2010/043598
- DE-A1- 10 314 094
- DE-A1- 19 508 042

## Beschreibung

Die Erfindung betrifft eine Scheibe, insbesondere eine Fahrzeugscheibe, mit elektrisch leitfähiger Beschichtung und Transmission elektromagnetischer Strahlung im Hochfrequenzbereich. Des Weiteren betrifft die Erfindung ein Verfahren zur Herstellung einer solchen Scheibe und deren Verwendung.

Aktuelle Kraftfahrzeuge benötigen eine Vielzahl von technischen Einrichtungen zum Senden und Empfangen von elektromagnetischer Strahlung zum Betrieb von Grunddiensten wie Rundfunkempfang, vorzugsweise in den Bändern AM, FM oder DAB, Mobiltelefonie in den Bändern GSM 900, GSM 1800 und UMTS sowie satellitengestützer Navigation (GPS).

Gleichzeitig weisen moderne Fahrzeugverglasungen zunehmend allseitige und vollflächige elektrisch leitfähige und für sichtbares Licht transparente Beschichtungen auf. Diese transparenten, elektrisch leitfähigen Beschichtungen schützen beispielsweise Innenräume vor Überhitzung durch Sonnenlicht oder Auskühlung, in dem sie einfallende Wärmestrahlung reflektieren, wie aus EP 378917 A bekannt ist. Transparente, elektrisch leitfähige Beschichtungen können durch Anlegen einer elektrischen Spannung eine gezielte Erwärmung der Scheibe bewirken, wie aus WO 2010/043598 A1 bekannt ist.

Den transparenten, elektrisch leitfähigen Beschichtungen ist gemeinsam, dass sie auch undurchlässig für elektromagnetische Strahlung im Hochfrequenzbereich sind. Durch eine allseitige und vollflächige Verglasung eines Fahrzeugs mit transparenten, elektrisch leitfähigen Beschichtungen ist das Senden und Empfangen von elektromagnetischer Strahlung im Innenraum nicht mehr möglich. Für den Betrieb von Sensoren wie Regensensoren, Kamerasystemen oder ortsfesten Antennen werden üblicherweise ein oder zwei örtlich begrenzte Bereiche der elektrisch leitfähigen, transparenten Beschichtung entschichtet. Diese entschichteten Bereiche bilden ein sogenanntes Kommunikationsfenster oder Datenübertragungsfenster und sind beispielsweise aus EP 1 605 729 A2 bekannt.

DE 195 08 042 A1 offenbart eine für elektrische Strahlung durchlässige und wärmereftektierende Beschichtung mit einem isolierenden durchlässigen Substrat, auf das eine leitende Schicht aufgebracht ist, die in eine Vielzahl von Streifenabschnitten unterteilt ist.

Da die transparenten, elektrisch leitfähigen Beschichtungen die Farbgebung und Reflexionswirkung einer Scheibe beeinflussen, sind Kommunikationsfenster optisch sehr auffällig. Durch entschichtete Bereiche können sich Störungen im Sichtfeld des Fahrers ergeben, die die Fahrsicherheit beieinträchtigen und die unbedingt zu vermeiden sind. Deshalb werden Kommunikationsfenster an unauffälligen Positionen der Scheibe angeordnet, beispielsweise im Bereich des Innenspiegels einer Windschutzscheibe, und durch Schwarzdrucke und Kunststoffblenden abgedeckt.

Derartige Kommunikationsfenster sind zu klein um das Senden und Empfangen hochfrequenter elektromagnetischer Strahlung zu ermöglichen, wie es beispielsweise für Mobiltelefonie und satellitengestützte Navigation notwendig ist. Dennoch erwartet der Benutzer Mobiltelefone an jeder beliebigen Position im Innenraum eines Fahrzeugs betreiben zu können.

Die Aufgabe der vorliegenden Erfindung besteht nunmehr darin, eine Scheibe mit transparenter, elektrisch leitfähiger Beschichtung bereitzustellen, die eine ausreichende Transmission von hochfrequenter elektromagnetischer Strahlung zum Betrieb von Mobiltelefonie in den Bändern GSM 900, GSM 1800 und UMTS sowie satellitengestützer Navigation (GPS) ermöglicht, die optisch ansprechend ist und die Durchsicht durch die Scheibe nicht wesentlich einschränkt, und die kostengünstig hergestellt werden kann. Diese und weitere Aufgaben werden nach dem Vorschlag der Erfindung durch eine Scheibe mit den Merkmalen der unabhängigen Patentansprüche gelöst. Vorteilhafte Ausgestaltungen der Erfindung sind durch die Merkmale der Unteransprüche angegeben.

Ein Verfahren zur Herstellung einer Scheibe mit Hochfrequenz-Transmission sowie die Verwendung einer solchen Scheibe gehen aus weiteren unabhängigen Patentansprüchen hervor.

Eine erfindungsgemäße Scheibe umfasst mindestens eine erste Scheibe, eine Zwischenschicht und eine zweite Scheibe sowie mindestens eine transparente, elektrisch leitfähige Beschichtung, die zwischen der Zwischenschicht und der ersten Scheibe und/oder zwischen der Zwischenschicht und der zweiten Scheibe angeordnet ist. Die transparente, elektrisch leitfähige Beschichtung umfasst mindestens einen Bereich, der mindestens zwei nahezu parallel angeordnete, entschichtete Linien aufweist. Zwei unmittelbar benachbarte Linien eines Bereichs haben einen vertikalen Abstand d von 9,5 mm bis 30,5 mm zueinander. Vertikaler Abstand in Sinne der vorliegenden Erfindung bedeutet der Abstand senkrecht zur Erstreckungsrichtung der Linie. Zwei Linien sind im Sinne der vorliegenden Erfindung benachbart oder unmittelbar benachbart, wenn zwischen den zwei Linien keine weiteren Linien vorhanden sind. Die Linien weisen eine Breite b von 0,19 mm bis 0,41 mm und eine Länge I von 20 mm bis 150 mm auf.

Eine alternative Ausgestaltung einer erfindungsgemäßen Scheibe umfasst mindestens eine Einzelscheibe mit Außenseite I und Innenseite IV und mindestens eine transparente, elektrisch leitfähige Beschichtung, die auf der Außenseite I und/oder der Innenseite IV angeordnet ist. Die transparente, elektrisch leitfähige Beschichtung umfasst mindestens einen Bereich, der mindestens zwei nahezu parallel angeordnete, entschichtete Linien aufweist. Zwei benachbarte Linien haben einen vertikalen Abstand d von 9,5 mm bis 30,5 mm. Die Linien weisen eine Breite b von 0,19 mm bis 0,41 mm und eine Länge I von 20 mm bis 150 mm auf.

Eine Einzelscheibe im Sinne der vorliegenden Erfindung kann eine einzelne Scheibe oder eine bereits laminierte Verbundscheibe aus zwei oder mehr Scheiben sein, die durch die Lamination eine fest verbundene Einheit ist.

Die Scheibe enthält bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Geeignete Gläser sind beispielsweise aus EP 0 847 965 B1 bekannt.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Die Größe der Scheibe kann breit variieren und richtet sich nach der Größe der erfindungsgemäßen Verwendung.

In einer vorteilhaften Ausgestaltung der Erfindung hat die Scheibe dielektrische Eigenschaften und eine Permittivitätszahl von 2 bis 8. Eine Scheibe aus Polymeren hat bevorzugt eine Permittivitätszahl von 2 bis 5. Eine Scheibe aus Glas hat bevorzugt eine Permittivitätszahl von 6 bis 8 und insbesondere von etwa 7.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in eine Richtung oder in mehrere Richtungen des Raumes gebogen. Die Scheibe kann farblos oder gefärbt sein.

In einer bevorzugten Ausführungsform der erfindungsgemäßen Scheibe als Verbundscheibe enthält mindestens eine der Scheiben Glas und mindestens eine der Scheiben enthält Kunststoff. Insbesondere bei einer erfindungsgemäßen Verwendung als Fahrzeugscheibe enthält die außenliegende Scheibe Glas und die innenliegende Scheibe Kunststoff.

Die Scheiben der Verbundscheibe werden durch mindestens eine Zwischenschicht miteinander verbunden. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Mindestens eine der einzelnen Scheiben der erfindungsgemäßen Verbundscheibe ist auf einer Innenseite mit einer transparenten, elektrisch leitfähigen Beschichtung beschichtet. Innenseite bedeutet hier jede einer Zwischenschicht zugewandte Seite.

Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Verbundscheibe den gesetzlichen Bestimmungen für Windschutzscheiben und vorderen Seitenscheiben entspricht und insbesondere für sichtbares Licht bevorzugt >70% und insbesondere >80% durchlässig ist. Für hintere Seitenscheiben und Heckscheiben kann "Durchlässig" auch 10% bis 70% Lichttransmission bedeuten.

Die transparente, elektrisch leitfähige Beschichtung ist bevorzugt eine funktionelle Beschichtung, besonders bevorzugt eine funktionelle Beschichtung mit SonnenschutzWirkung. Eine Beschichtung mit Sonnenschutzwirkung weist reflektierende Eigenschaften im Infrarot-Bereich und damit im Bereich der Sonneneinstrahlung auf. Dadurch wird ein Aufheizen des Innenraums eines Fahrzeugs oder Gebäudes infolge von Sonnenstrahlung vorteilhaft vermindert. Solche Beschichtungen sind dem Fachmann bekannt und enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Die Dicke der transparenten, elektrisch leitfähigen Beschichtung kann breit variieren und den Erfordernissen des Einzelfalls angepasst werden. Wesentlich ist dabei, dass die Dicke der transparenten, elektrisch leitfähigen Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird. Die transparente, elektrisch leitfähige Beschichtung weist bevorzugt eine Schichtdicke von 10 nm bis 5 µm und besonders bevorzugt von 30 nm bis 1 µm auf.

Der Flächenwiderstand der transparenten, elektrisch leitfähigen Beschichtung beträgt bevorzugt von 0,5 Ohm/Quadrat bis 200 Ohm/Quadrat, besonders bevorzugt von 0,7 Ohm/Quadrat bis 30 Ohm/Quadrat, und ganz besonders bevorzugt von 2 Ohm/Quadrat bis 20 Ohm/Quadrat. Für Flächenwiderstände in diesem Bereich werden besonders gute infrarotreflektierende Eigenschaften erzielt.

Bei einer vorteilhaften Ausgestaltung der erfindungsgemäßen Verbundscheibe befindet sich mindestens eine transparente, elektrisch leitfähige Schicht auf mindestens einer der Innenseiten der Scheiben. Im Falle eines Scheibenverbundes aus zwei Scheiben kann sich eine transparente, elektrisch leitfähige Schicht auf der Innenseite der einen oder der anderen Scheiben befinden. Alternativ kann sich auch jeweils eine transparente, elektrisch leitfähige Schicht auf jeder der beiden Innenseiten befinden. Im Falle eines Scheibenverbunds aus mehr als zwei Scheiben können sich auch mehrere transparente, elektrisch leitfähige Beschichtungen auf mehreren Innenseiten der Scheiben befinden. Alternativ kann eine transparente, elektrisch leitfähige Beschichtung zwischen zwei thermoplastischen Zwischenschichten eingebettet sein. Die transparente, elektrisch leitfähige Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

In einer alternativen Ausgestaltung der Erfindung ist die transparente, elektrisch leitfähige Schicht oder eine Trägerfolie mit der transparenten, elektrisch leitfähigen Schicht auf einer Außenseite einer Einzelscheibe angeordnet.

Die transparente, elektrisch leitfähige Beschichtung umfasst mindestens einen Bereich, der mindestens zwei nahezu parallel angeordnete, entschichtete Linien aufweist. Eine geringfügige Abweichung von der parallelen Anordnung kann sich dadurch ergeben, dass parallele Linien in der transparenten, elektrisch leitfähigen Beschichtung auf einer planen Scheibe entschichtet werden und die Scheibe mit den Linien anschließend gebogen wird.

Zwei benachbarte Linien haben einen vertikalen Abstand d von 9,5 mm bis 30,5 mm Dieser Bereich ist besonders vorteilhaft, da für vertikale Abstände von weniger als 9,5 mm eine starke Verkopplung zwischen den entschichteten Linien stattfindet und sich die Transmissionsdämpfung der gewünschten Frequenz verschlechtert. Für vertikale Abstände von mehr als 30,5 mm erhöht sich die Transmissionsdämpfung.

Erfindungsgemäße entschichtete Linien weisen eine Breite b von 0,19 mm bis 0,41 mm auf. Dieser Bereich für die Breite b ist besonders vorteilhaft, da er ein guter Kompromiss ist zwischen niedriger Transmissionsdämpfung von weniger als 12 dB und niedrigen Prozesskosten, auf Grund kurzer Strukturierungszeiten. Des Weiteren sind entschichtete Linien mit derart geringen Breiten optisch sehr unauffällig und beeinträchtigen das Erscheinungsbild der Scheibe nicht.

Die Länge I der Linien beträgt von 20 mm bis 150 mm. Die Länge I der Linien kann auf das Frequenzband abgestimmt werden, für das die Scheibe eine möglichst geringe Transmissionsdämpfung aufweisen soll. Für einen Mobilfunkbetrieb im GSM 900-Band beträgt die Länge I bevorzugt 60 mm bis 150 mm und besonders bevorzugt 90 mm bis 110 mm. Im Bereich von 2,5 GHz beträgt die Länge I mit niedriger Transmissionsdämpfung bevorzugt 20 mm bis 100 mm. Die optimale Länge I mit niedriger Transmissionsdämpfung bei ausreichender Bandbreite kann vom Fachmann im Rahmen einfacher Simulationen und Experimente ermittelt werden.

In einer vorteilhaften Ausgestaltung einer erfindungsgemäßen Scheibe weist die transparente, elektrisch leitfähige Beschichtung mindestens fünf Bereiche und insbesondere acht Bereiche auf. In jedem Bereich sind mindestens sieben und insbesondere elf Linien entschichtet. Mit einer derartigen Verteilung der entschichteten Linien lässt sich eine besonders niedrige Transmissionsdämpfung und günstige Verteilung der Empfangs- und Sendeleistung hinter der Scheibe erzielen.

Der Flächenanteil der Bereiche, die die entschichteten Linien und die Zwischenräume mit Länge I und vertikalem Abstand d umfassen, beträgt vorteilhafterweise von 7 % bis 25 % der Gesamtfläche der Scheibe. Mit diesem Flächenanteil lässt sich eine besonders niedrige Transmissionsdämpfung und günstige Verteilung der Empfangsund Sendeleistung hinter der Scheibe erzielen.

Die Anzahl der Bereiche und Linien richtet sich nach den Anforderungen an die Transmissionsdämpfung und den Abmessungen der Scheibe. Im Falle einer Windschutzscheibe ist insbesondere die Größe und Ausgestaltung des Innenraums zu beachten.

In einer vorteilhaften Ausgestaltung der Erfindung als Windschutzscheibe sind die Linien außerhalb des A-Sichtfeldes des Fahrers angeordnet. Da A-Sichtfeld des Fahrers wird beispielsweise nach Anhang 18 ECE R43 definiert. Obwohl die erfindungsgemäßen entschichteten Linien sehr dünn und daher optisch unauffällig sind, gilt es jede Störung im Sichtfeld des Fahrers zu vermeiden.
In einer vorteilhaften Ausgestaltung der Erfindung beträgt der horizontale Abstand h zwischen zwei benachbarten Bereichen von 9,5 mm bis 100 mm. Für horizontale Abstände h von weniger als 9,5 mm erfolgt eine starke Kopplung zwischen den entschichteten Linien, die zu einer Erhöhung der Transmissionsdämpfung bei der gewünschten Frequenz führt.

Die erfindungsgemäße transparente, elektrisch leitfähige Beschichtung weist bevorzugt entschichtete Linien auf, die horizontal oder vertikal angeordnet sind, bezüglich der Anordnung im eingebauten Zustand der Scheibe an deren Verwendungsort. Besonders vorteilhaft sind in Einbaulage horizontal verlaufende Linien, da diese weniger störend sind und weniger Streulicht und Reflektionen verursachen als vertikal verlaufende Linien. Gleichwohl können horizontal und vertikal angeordnete Linien auf einer Scheibe miteinander kombiniert werden und/oder Linien in unterschiedlichem Winkel zur Horizontalen angeordnet sein.

Die Erfindung umfasst ein Verfahren zur Herstellung einer wie oben beschriebenen erfindungsgemäßen Verbundscheibe, wobei mindestens:
a. die transparente, elektrisch leitfähige Beschichtung auf der Innenseite 11 der ersten Scheibe, der Innenseite III der zweiten Scheibe und/oder auf mindestens einer Seite V, VI der Zwischenschicht aufgebracht wird,
b. in der transparenten, elektrisch leitfähigen Beschichtung durch Laserstrukturierung entschichtete Linien eingebracht werden und
c. die erste Scheibe, die Zwischenschicht und die zweite Scheibe miteinander laminiert werden.

Die Erfindung umfasst weiterhin ein alternatives Verfahren zur Herstellung einer wie oben beschriebenen erfindungsgemäßen Einzelscheibe, wobei mindestens:
a. die transparente, elektrisch leitfähige Beschichtung auf der Außenseite I und/oder der Innenseite IV der Einzelscheibe aufgebracht wird,
b. in der transparenten, elektrisch leitfähigen Beschichtung durch Laserstrukturierung entschichtete Linien eingebracht werden.

Die Entschichtung einzelner Linien in der transparenten, elektrisch leitfähigen Beschichtung erfolgt durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 50 µm bis 300 µm und insbesondere 60 µm bis 100 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie der Breite b, die breiter ist als die Breite eines Laserschnitts erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

Die Erfindung erstreckt sich weiterhin auf die Verwendung einer wie oben beschriebenen Scheibe in einer Fahrzeugkarosserie oder einer Fahrzeugtür eines Fortbewegungsmittels zu Lande, zu Wasser oder in der Luft, in Gebäuden als Teil einer Außenfassade oder als Gebäudefenster und/oder als Einbauteil in Möbeln und Geräten.

Die Verwendung einer erfindungsgemäßen Scheibe als Windschutzscheibe ist besonders vorteilhaft. So sind Mobilfunksendestationen beispielsweise entlang von Autobahnen oder Schnellstraßen montiert. Die hochfrequente, elektromagnetische Strahlung kann dann in Fahrtrichtung von vorne durch die erfindungsgemäße Windschutzscheibe in den Innenraum des Fahrzeugs gelangen. In Städten sind die Mobilfunksendestationen üblicherweise auf Dächern oder erhöhten Positionen montiert und strahlen von oben herab. Satellitennavigationssignale strahlen ebenso von oben herab auf ein Fahrzeug ein. Da Windschutzscheiben zur Verbesserung der Aerodynamik eine stark geneigte Einbauposition aufweisen, können Mobilfunksignale oder Satellitennavigationssignale auch von oben, durch die Scheibe hindurch, in den Fahrzeuginnenraum gelangen.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:
Figur 1 eine schematische Darstellung einer erfindungsgemäßen Verbundscheibe in einer Draufsicht,
Figur 2 eine vergrößerte Darstellung des Ausschnitts Z der erfindungsgemäßen Scheibe aus Figur 1,
Figur 3 eine Querschnittdarstellung entlang der Schnittlinie A-A' aus Figur 1,
Figur 4 eine Querschnittdarstellung entlang der Schnittlinie A-A' aus Figur 1 eines Ausführungsbeispiels mit einer erfindungsgemäßen Einzelscheibe,
Figur 5 ein Flussdiagramm eines Ausführungsbeispiels des erfindungsgemäßen Verfahrens,
Figur 6 ein Diagramm der Signalqualität in Abhängigkeit der Breite b eines entschichteten Bereichs,
Figur 7 ein Diagramm der Transmissionsdämpfung in Abhängigkeit des vertikalen Abstands d benachbarter Linien und
Figur 8 ein Diagramm der Transmissionsdämpfung in Abhängigkeit des Flächenanteils der entschichteten Bereiche.

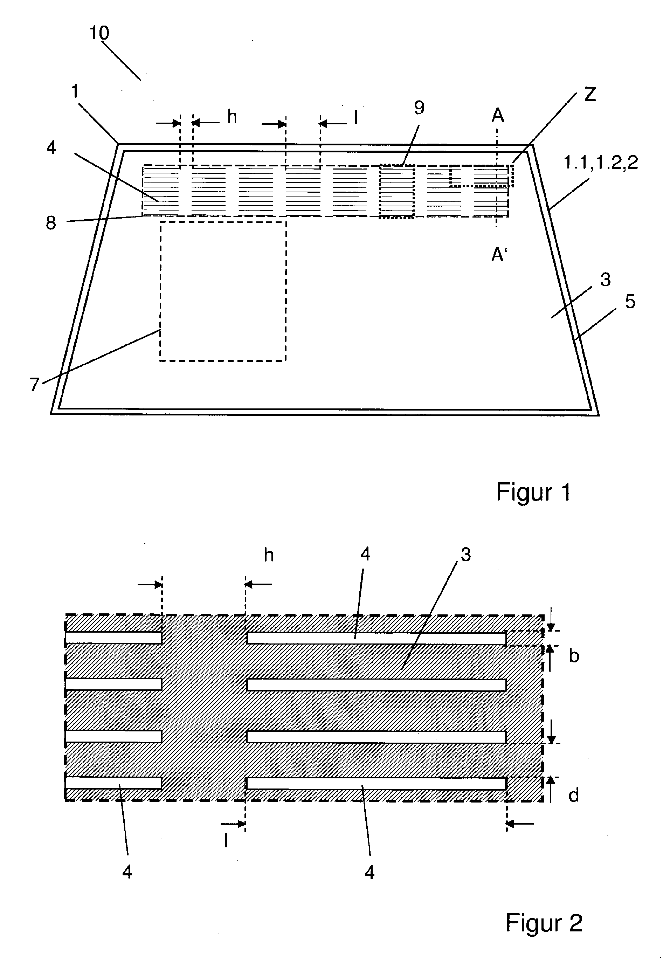

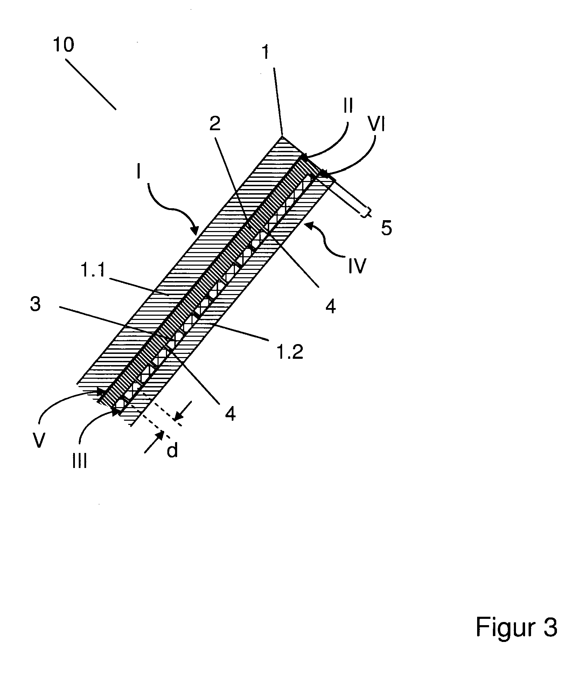

Figur 1 zeigt eine schematische Darstellung einer erfindungsgemäßen Scheibe 10 am Beispiel einer Fahrzeugwindschutzscheibe in einer Draufsicht. Figur 2 zeigt einen vergrößerten Ausschnitt Z aus Figur 1 und Figur 3 eine Querschnittsdarstellung entlang der Schnittlinie A-A' aus Figur 1. Die Scheibe 10 ist ohne die Erfindung einzuschränken für die Transmission von Mobilfunkstrahlung im GSM 900-Band optimiert. Die Scheibe 10 umfasst eine Verbundscheibe 1 aus zwei einzelnen Scheiben, nämlich einer starren erste Scheibe 1.1 und einer starren zweite Scheibe 1.2, die über eine thermoplastische Zwischenschicht 2 fest miteinander verbunden sind. Die einzelnen Scheiben 1.1,1.2 haben in etwa eine gleiche Größe und sind beispielsweise aus Glas, insbesondere Floatglas, Gussglas und Keramikglas gefertigt, wobei sie gleichermaßen aus einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephthalat (PET) hergestellt sein können. Allgemein kann jedes Material mit hinreichender Transparenz, ausreichender chemischer Beständigkeit sowie geeigneter Form- und Größenstabilität verwendet werden. Für eine anderweitige Verwendung, beispielsweise als Dekorteil, wäre es auch möglich, die erste Scheibe 1.1 und die zweite Scheibe 1.2 aus einem flexiblen und/oder einem nichttransparenten Material herzustellen. Die jeweilige Dicke der ersten Scheibe 1.1 und der zweiten Scheibe 1.2 kann je nach Verwendung breit variieren und kann für Glas beispielsweise im Bereich von 1 bis 24 mm liegen. Im vorliegenden Beispiel haben die erste Scheibe 1.1 eine Dicke von 2,1 mm und die zweite Scheibe 1.2 eine Dicke von 1,8 mm.

In üblicher Weise sind die Scheibenflächen mit den römischen Ziffern I-IV bezeichnet, wobei Seite I der Außenseite der ersten Scheibe 1.1, Seite II der Innenseite der ersten Scheibe 1.1, Seite III der Innenseite der zweiten Scheibe 1.2 und Seite IV der Außenseite der zweiten Scheibe 1.2 der Verbundscheibe 1 entspricht. In der Verwendung als Windschutzscheibe ist die Seite I der äußeren Umgebung und die Seite IV der Fahrgastzelle des Kraftfahrzeugs zugewandt.

Die Zwischenschicht 2 zur Verbindung von erster Scheibe 1.1 und zweiter Scheibe 1.2 enthält vorzugsweise einen klebenden Kunststoff bevorzugt auf Basis von Polyvinylbutyral (PVB), Ethylen-Vinyl-Acetat (EVA) oder Polyurethan (PU). Die Zwischenschicht 2 kann beispielsweise auch als Trilayer ausgebildet sein. Bei einem Trilayer ist eine Folie, die beispielsweise Polyethylenterephthalat (PET) enthält, zwischen zwei Schichten eines klebenden Kunststoffs angeordnet. Die PET-Folie kann Träger der transparenten, elektrisch leitfähigen Beschichtung 3 sein.

Die Verbundscheibe 1 ist für sichtbares Licht beispielsweise im Wellenlängenbereich von 350 nm bis 800 nm transparent, wobei unter dem Begriff "Transparenz" eine Lichtdurchlässigkeit von mehr als 50%, vorzugsweise mehr als 70% und insbesondere bevorzugt mehr als 80% zu verstehen ist.

Die Permittivitätszahl der Scheiben 1.1,1.2 der Verbundscheibe 1 beträgt für Scheiben aus Floatglas von 6 bis 8 und beispielsweise 7.

Im dargestellten Beispiel ist die transparente, elektrisch leitfähige Beschichtung 3 auf die der Zwischenschicht 2 zugewandten Seite III der inneren Scheibe 1.2 aufgebracht. Die transparente, elektrisch leitfähige Beschichtung 3 dient als infrarotreflektierende Schicht der Verbundscheibe 1. Das bedeutet, dass der Anteil an Wärmestrahlung von eintretendem Sonnenlicht zu einem großen Teil reflektiert wird. Bei Verwendung der Verbundscheibe 1 in einem Fahrzeug sorgt dies für eine verringerte Erwärmung des Innenraums bei Sonneneinstrahlung. Die transparente, elektrisch leitfähige Beschichtung 3 ist beispielsweise aus EP 0 847 965 B1 bekannt und enthält zwei Silberschichten, die jeweils zwischen mehreren Metall- und Metalloxidschichten eingebettet sind. Die transparente, elektrisch leitfähige Beschichtung 3 hat einen Flächenwiderstand von etwa 4 Ohm/Quadrat.

Die transparente, elektrisch leitfähige Beschichtung 3 kann gleichwohl auf die der thermoplastischen Zwischenschicht 2 zugewandten Seite II der äußeren Scheibe 1.1, oder auf beiden Scheibeninnenseiten II und III angeordnet sein. Die transparente, elektrisch leitfähige Beschichtung 3 kann zusätzlich oder ausschließlich auf einer der Außenseiten I und IV oder beiden Außenseiten I und IV der Verbundscheibe 1 angeordnet sein.

Die transparente, elektrisch leitfähige Beschichtung 3 ist auf der gesamten Scheibe 1.2 aufgebracht, abzüglich eines randentschichteten Bereichs 5. Die Randentschichtung im Bereich 5 verhindert einen Kontakt der transparenten, elektrisch leitfähigen Beschichtung 3, was bei korrosionsempfindlichen Beschichtungen vorteilhaft ist. Weiterhin ist die erste Scheibe 1.1 mit einer opaken Farbschicht versehen, die auf der Seite II aufgebracht ist und einen rahmenförmig umlaufenden Maskierungsstreifen bildet, welcher in den Figuren nicht näher dargestellt ist. Die Farbschicht besteht vorzugsweise aus einem elektrisch nichtleitenden, schwarz eingefärbten Material, das in die erste 1.1 oder die zweite Scheibe 1.2 eingebrannt werden kann. Der Maskierungsstreifen verhindert einerseits die Sicht auf einen Klebestrang, mit dem die Verbundscheibe 1 in die Fahrzeugkarosserie eingeklebt ist, andererseits dient er als UV-Schutz für das verwendete Klebematerial.

Des Weiteren ist die transparente, elektrisch leitfähige Beschichtung 3 in mehreren linienförmigen Bereichen entschichtet, die im Folgenden als Linien 4 bezeichnet werden. Im dargestellten Beispiel aus Figur 1 sind jeweils elf vertikal übereinander und nahezu parallel angeordnete Linien 4 in acht Bereichen 9 angeordnet. Die acht Bereiche 9 sind in einem Bereich 8 am oberen Rand der Scheibe 1 horizontal nebeneinander angeordnet. Die Begriffe vertikal und horizontal geben die Position in Einbaulage der Fahrzeugscheibe wieder. Die acht Bereiche 9 sind am oberen Scheibenrand der längeren Seite der Scheibe 1 und außerhalb des A-Sichtfeld 7 des Fahrers gemäß Anhang 18 der ECE R43 angeordnet. Zwei benachbarte Bereiche 9 haben jeweils einen horizontalen Abstand h von 9,5 mm bis 100 mm und insbesondere 40 mm.

Figur 3 zeigte einen vergrößerten Ausschnitt Z des Bereichs 8 aus Figur 1. Die entschichteten Linien 4 haben einen vertikalen Abstand d von 9,5 mm bis 30,5 mm und insbesondere 15 mm. Vertikaler Abstand bedeutet im Sinne der vorliegenden Erfindung der Abstand in Richtung der kürzeren Seite der Linien 4 und horizontaler Abstand bedeutet in Erstreckungsrichtung der Linien 4, das heißt in einer Flucht mit der Linie 4.

Die Linie 4 hat eine Breite b von 0,19 mm bis 0,41 mm und beispielsweise von 0,3 mm. Die Linie 4 hat eine Länge I von 60 mm bis 150 mm und beispielsweise 100 mm. Die Länge I ist auf die hochfrequente elektromagnetische Strahlung mit Frequenz f abgestimmt, für die die Scheibe 10 maximal durchlässig sein soll. Die Länge I ist in erster Näherung über die Beziehung I = c/(2*f*(εᵣ)^{0,5}) von der effektiven Permittivitätszahl εᵣ der Scheibe 1.1,1.2 und der Zwischenschicht 2 abhängig, wobei c die Lichtgeschwindigkeit ist. Auf Grund von benachbart angeordneten, entschichteten Linien 4 kommt es zur Beeinflussung der Linien untereinander und damit zur Ausbildung von Resonanzen und Frequenzverschiebungen, die eine Anpassung und Optimierung der Länge I, der Breite b, des vertikalen Abstands d und des horizontalen Abstand h notwendig machen. Diese können durch dem Fachmann geläufige Simulationen berechnet werden.

Die horizontale Ausrichtung der Linien 4 ist besonders vorteilhaft für den Empfang von vertikal gesendetem Mobilfunk. Die Erfindung umfasst ebenso vertikal oder unter verschiedenen Winkeln angeordnete entschichtete Linien 4, wenn dies zweckdienlich ist.

Die Scheibe 10 aus Figur 1 wurde für den Betrieb des Mobilfunkbandes GSM 900 optimiert. Wie Simulationen gezeigt haben, hat die Scheibe 10 für die Frequenz 900 MHz eine mittlere Transmissionsabschwächung von weniger als 12 dB und eine Bandbreite mehr als 200 MHz und ist deshalb ausgezeichnet für den Betrieb von Mobilfunkgeräten im GSM 900-Band geeignet. Durch Variation der Parameter, wie der Länge I der entschichteten Bereiche kann die Scheibe 10 in einfacher Weise für die Transmission anderer Frequenzbänder oder mehrerer Frequenzbänder optimiert werden.

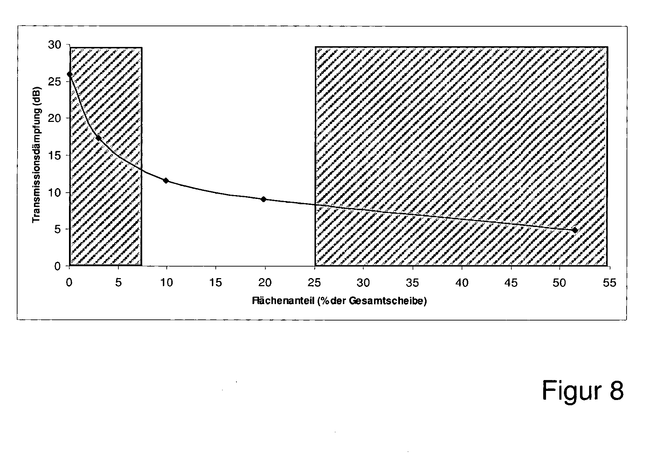

Die Fläche der acht Bereiche 9 bedeckt etwa 7 % der Gesamtfläche der Verbundscheibe 1. Dieser Flächenanteil ergibt ein besonders günstiges Verhältnis zwischen Prozesskosten, optischem Aspekt und Transmission, was unter Figur 8 ausführlich erläutert wird.

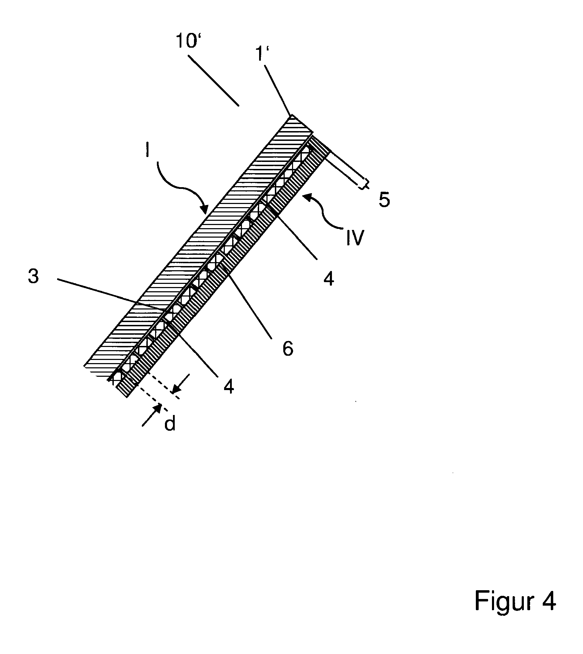

Figur 4 zeigt eine Querschnittdarstellung entlang der Schnittlinie A-A' aus Figur 1 eines Ausführungsbeispiels einer erfindungsgemäßen Scheibe 10' mit einer Einzelscheibe 1'. Die transparente, elektrisch leitende Beschichtung 3 mit entschichteten Linien 4 ist auf der dem Fahrzeuginnenraum zugewandten Seite IV der Einzelscheibe 1' angeordnet. Form und Material der Einzelscheibe 1' entsprechen den einzelnen Scheiben 1.1,1.2 aus Figur 1. Die transparente, elektrisch leitende Beschichtung 3 und die entschichteten Linien 4 entsprechen ebenso dem Ausführungsbeispiel von Figur 1. Die transparente, elektrisch leitfähige Beschichtung 3 ist zusätzlich durch eine Isolationsschicht 6 geschützt, die beispielsweise eine Polymerfolie wie Polyethylenterephthalat (PET) oder Polyvinylfluorid (PVF) enthält. Alternativ kann die transparente, elektrisch leitfähige Beschichtung 3 eine isolierende und kratzfeste Deckschicht aus anorganischen Oxiden aufweisen, wie Siliziumoxid, Titanoxid, Tantalpentoxid oder Kombinationen daraus.

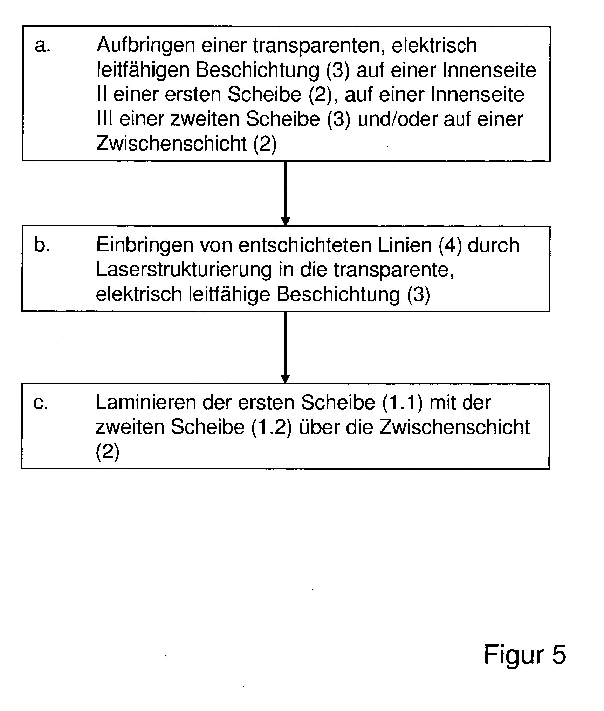

Figur 5 zeigt ein Flussdiagramm eines Ausführungsbeispiels des erfindungsgemäßen Verfahrens zur Herstellung einer erfindungsgemäßen Scheibe 10.

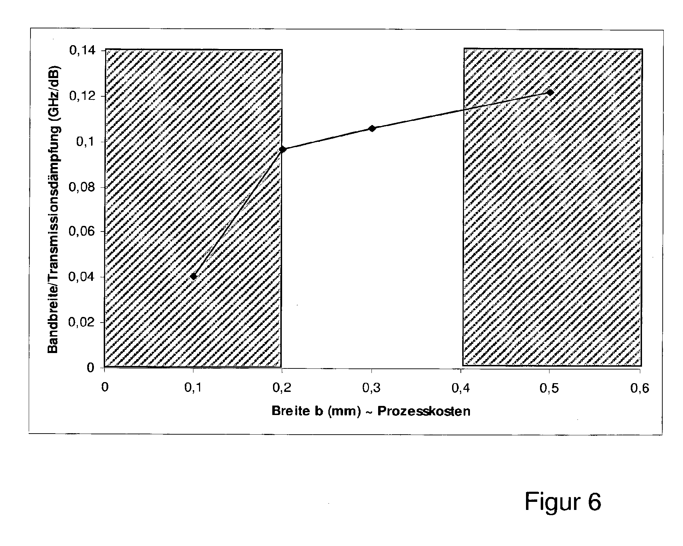

Figur 6 zeigt das Diagramm einer Simulation der Signalqualität von elektromagnetischer Strahlung nach Durchtritt durch eine erfindungsgemäße Verbundglasscheibe 10 aus Figur 1. Die Signalqualität ist als Quotient der Bandbreite durch die zugehörige Transmissionsdämpfung dargestellt und in Abhängigkeit von der Breite b der entschichteten Linien 4 aufgetragen. Der Signalverlauf zeigt einen steilen Anstieg bis zu Linienbreiten b von etwa 0,2 mm. Danach nimmt die Signalqualität nur noch wenig und mit einer geringeren Steigung zu. Demnach sind entschichtete Bereiche 4 mit Breiten b von mehr als 0,19 mm besonders vorteilhaft.

Gleichzeitig bedeutet eine größere Breite b eine Zunahme der Prozesszeit beim Entschichten der Linien 4. Dies ist insbesondere der Fall, wenn die Breite b einer Linie 4 so groß ist, dass die Linie 4 beim Entschichten mit einem Laserstrahl mehrmals abgefahren werden muss. Eine Zunahme der Prozesszeit bedeutet auch eine Zunahme an Prozesskosten. Des Weiteren sind breite, entschichtete Linien 4 optisch sehr störend und beispielsweise in einer Fahrzeugverglasung nicht tolerierbar. Eine Breite b bis etwa 0,41 mm ist ein akzeptabler Kompromiss zwischen geringen Prozesskosten, optisch geringen Störungen und ausreichender Signalqualität. Dieses Ergebnis war für den Fachmann unerwartet und überraschend.

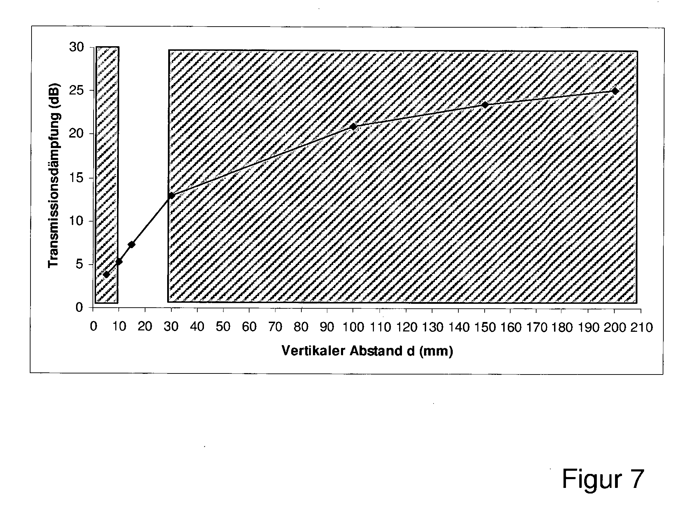

Figur 7 zeigt das Diagramm einer Simulation der Transmissionsdämpfung von elektromagnetischer Strahlung nach Durchtritt durch eine erfindungsgemäße Verbundglasscheibe 10 aus Figur 1. Die Transmissionsdämpfung ist in Abhängigkeit des vertikalen Abstands d benachbarter Linien 4 aufgetragen. Der Signalverlauf zeigt einen steilen Anstieg bis zu vertikalen Abständen d von etwa 30 mm. Für größere vertikale Abstände d als 30 mm erreicht die Transmissionsdämpfung Werte von mehr als 12 dB, was eine unzureichende Transmission für den Betrieb von Mobilfunkeinrichtungen hinter der Verbundscheibe 10 ist. Für kleinere vertikale Abstände d als 9,5 mm findet eine starke Kopplung zwischen den entschichteten Linien 4 statt. Die starke Kopplung führt zu einer Verschiebung der Resonanzfrequenz und damit zu einer Verstimmung der Transmissionseigenschaften der Scheibe 10. Des Weiteren wird der visuelle Aspekt durch nah beieinander liegende entschichtete Linien stark beeinträchtigt. So verschlechtert sich die Durchsicht stark, insbesondere bei Fahrten mit eingeschränkten Lichtverhältnissen und Blendung durch Fahrzeugbeleuchtungen bei Dämmerung und in der Nacht. Zudem ergeben sich bei gleichbleibender strukturierter Gesamtfläche für kleinere Abstände d erhöhte Prozesskosten, da mehr Linien entschichtet werden müssen. Demnach sind vertikale Abstände d von 9,5 mm bis 30,5 mm besonders vorteilhaft.

Figur 8 zeigt das Diagramm der Transmissionsdämpfung in Abhängigkeit des Flächenanteils der Bereiche 9 in Prozent der Gesamtfläche der Verbundscheibe 1. Die Fläche des Bereichs 9 setzt sich zusammen aus der Fläche der entschichteten Linien 4 und den Flächenelementen mit Länge I und vertikalem Abstand d zwischen jeweils zwei benachbart angeordneten Linien 4 eines Bereiches 9. Im Bereich von 0% bis 7 % ist die Transmissionsdämpfung größer als 12 dB und deshalb nicht für den Betrieb von Mobilfunkeinrichtungen ausreichend. Für Flächenanteile größer 25 % verringert sich die Transmissionsdämpfung nur noch wenig. Da der Flächenanteil der Bereiche 9 an der Gesamtfläche proportional zur Prozesszeit der Entschichtung ist und größere entschichtete Flächenanteile optisch störender sind, ist der Bereich zwischen 7 % und 25 % besonders vorteilhaft. Dies war für den Fachmann unerwartet und überraschend.

### Bezugszeichenliste

- 1: Verbundscheibe
- 1': Einzelscheibe
- 1.1: erste Scheibe, äußere Scheibe
- 1.2: zweite Scheibe, innere Scheibe
- 2: Zwischenschicht
- 3: transparente, elektrisch leitfähige Beschichtung
- 4: entschichtete Linie, Linie
- 5: Randentschichtung
- 6: Schutzschicht
- 7: A-Sichtfeld
- 8: Bereich
- 9: Bereich
- 10, 10': Scheibe

- A-A': Schnittlinie
- b: Breite des entschichteten Bereichs 4
- d: vertikaler Abstand benachbarter entschichteten Bereiche 4
- h: horizontaler Abstand benachbarter entschichteten Bereiche 4
- l: Länge des entschichteten Bereichs 4
- Z: Ausschnitt

- I: Außenseite der ersten Scheibe 1.1, Außenseite der Scheibe 1'
- II: Innenseite der ersten Scheibe 1.1
- III: Innenseite der zweiten Scheibe 1.2
- IV: Außenseite der zweiten Scheibe 1.2, Innenseite der Scheibe 1'
- V: Seite der Zwischenschicht 2
- VI: Seite der Zwischenschicht 2

## Patentansprüche

1. Scheibe (10), umfassend:
- mindestens erste Scheibe (1.1), Zwischenschicht (2) und zweite Scheibe (1.2) und
- mindestens eine transparente, elektrisch leitfähige Beschichtung (3), die zwischen der Zwischenschicht (2) und der ersten Scheibe (1.1) und/oder zwischen der Zwischenschicht (2) und der zweiten Scheibe (1.2) angeordnet ist,
wobei
- die transparente, elektrisch leitfähige Beschichtung (3) mindestens einen Bereich (9) mit mindestens zwei nahezu parallel angeordneten, entschichteten Linien (4) aufweist,
- zwischen benachbarten Linien (4) keine weiteren Linien vorhanden sind und ein vertikaler Abstand d von 9,5 mm bis 30,5 mm vorliegt und
- die Linien (4) eine Breite b von 0,19 mm bis 0,41 mm und eine Länge I von 20 mm bis 150 mm aufweisen.

2. Scheibe (10'), umfassend:
- Einzelscheibe (1') mit Außenseite (I) und Innenseite (IV) und
- mindestens eine transparente, elektrisch leitfähige Beschichtung (3), die auf der Außenseite (I) und/oder der Innenseite (IV) angeordnet ist,
wobei
- die transparente, elektrisch leitfähige Beschichtung (3) mindestens einen Bereich (9) mit mindestens zwei nahezu parallel angeordneten, entschichteten Linien (4) aufweist,
- zwischen benachbarten Linien (4) keine weiteren Linien vorhanden sind und ein vertikaler Abstand d von 9,5 mm bis 30,5 mm vorliegt und
- die Linien (4) eine Breite b von 0,19 mm bis 0,41 mm und eine Länge I von 20 mm bis 150 mm aufweisen.

3. Scheibe nach einem der Ansprüche 1 bis 2 wobei die entschichteten Linien (4) horizontal oder vertikal angeordnet sind.

4. Scheibe nach einem der Ansprüche 1 bis 3, wobei die Fläche der Bereiche (9) einen Flächenanteil von 7 % bis 25 % der Scheibe (10,10') aufweist.

5. Scheibe nach einem der Ansprüche 1 bis 4, wobei die transparente, elektrisch leitfähige Beschichtung (3) mindestens fünf Bereiche (9) mit jeweils mindestens sieben entschichteten Linien (4) aufweist.

6. Scheibe nach einem der Ansprüche 1 bis 5, wobei der horizontale Abstand h zwischen zwei benachbarten Bereichen (9) von 9,5 mm bis 100 mm beträgt.

7. Scheibe nach einem der Ansprüche 1 bis 6, wobei die entschichteten Linien (4) außerhalb des A-Sichtfeldes (7) angeordnet sind.

8. Scheibe nach einem der Ansprüche 1 bis 7, wobei die Scheibe (1, 1.1, 1.2) oder die Einzelscheibe (1') Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

9. Scheibe nach einem der Ansprüche 1 bis 8, wobei die Scheibe (1, 1.1, 1.2) oder die Einzelscheibe (1') eine Permittivitätszahl von 2 bis 8 und bevorzugt von 6 bis 8 aufweist.

10. Scheibe nach einem der Ansprüche 1 bis 9, wobei die transparente, elektrisch leitfähige Beschichtung (3) mindestens ein Metall enthält, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminiumdotiertes Zinkoxid (AZO), Fluor-dotiertes Zinnoxid (FTO, SnO₂:F), Antimondotiertes Zinnoxid (ATO, SnO₂:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon.

11. Scheibe nach einem der Ansprüche 1 bis 10, wobei die transparente, elektrisch leitfähige Beschichtung (3) einen Flächenwiderstand von 0,5 Ohm/Quadrat bis 200 Ohm/Quadrat, bevorzugt 0,7 Ohm/Quadrat bis 30 Ohm/Quadrat aufweist.

12. Verfahren zur Herstellung einer Scheibe (10) nach einem der Ansprüche 1 und 3 bis 11, wobei mindestens:
a. die transparente, elektrisch leitfähige Beschichtung (3) auf der Innenseite (II) der ersten Scheibe (1.1), der Innenseite (III) der zweiten Scheibe (1.2) und/oder auf mindestens einer Seite (V, VI) der Zwischenschicht (2) aufgebracht wird,
b. in der transparenten, elektrisch leitfähigen Beschichtung (3) durch Laserstrukturierung Linien (4) eingebracht werden und
c. die erste Scheibe (1.1), die Zwischenschicht (2) und die zweite Scheibe (1.2) miteinander laminiert werden.

13. Verfahren zur Herstellung einer Scheibe (10') nach einem der Ansprüche 2 bis 11, wobei mindestens:
a. die transparente, elektrisch leitfähige Beschichtung (3) auf der Außenseite (I) und/oder der Innenseite (IV) der Einzelscheibe (1') aufgebracht wird,
b. in der transparenten, elektrisch leitfähigen Beschichtung (3) durch Laserstrukturierung Linien (4) eingebracht werden.

14. Verwendung einer Scheibe nach einem der Ansprüche 1 bis 11 als Einzelscheibe oder Verbundscheibe, in einer Fahrzeugkarosserie oder einer Fahrzeugtür eines Fortbewegungsmittels zu Lande, zu Wasser oder in der Luft, bevorzugt als Windschutzscheibe, in Gebäuden als Teil einer Außenfassade oder eines Gebäudefensters und/oder als Einbauteil in Möbeln und Geräten.

## Claims

1. Pane (10), comprising:
- at least a first pane (1.1), an intermediate layer (2), and a second pane (1.2), and
- at least one transparent, electrically conductive coating (3) that is arranged between the intermediate layer (2) and the first pane (1.1) and/or between the intermediate layer (2) and the second pane (1.2),
wherein
- the transparent, electrically conductive coating (3) has at least one region (9) with at least two de-coated lines (4) arranged virtually parallel,
- there are no further lines between adjacent lines (4) and there is a vertical distance d of 9.5 mm to 30.5 mm between adjacent lines (4), and
- the lines (4) have a width b of 0.19 mm to 0.41 mm and a length I of 20 mm to 150 mm.

2. Pane (10'), comprising:
- a single plane (1') with an outer side (I) and an inner side (IV), and
- at least one transparent, electrically conductive coating (3) that is arranged on the outer side (I) and/or the inner side (IV),
wherein
- the transparent, electrically conductive coating (3) has at least one region (9) with at least two de-coated lines (4) arranged virtually parallel,
- there are no further lines between adjacent lines (4) and there is a vertical distance d of 9.5 mm to 30.5 mm between adjacent lines (4), and
- the lines (4) have a width b of 0.19 mm to 0.41 mm and a length I of 20 mm to 150 mm.

3. Pane according to one of claims 1 through 2, wherein the de-coated lines (4) are arranged horizontally or vertically.

4. Pane according to one of claims 1 through 3, wherein the area of the region (9) has an area share of 7 % to 25 % of the pane (10,10').

5. Pane according to one of claims 1 through 4, wherein the transparent, electrically conductive coating (3) as at least five regions (9) with at least seven de-coated lines (4) each.

6. Pane according to one of claims 1 through 5, wherein the horizontal distance h between two adjacent regions (9) is from 9.5 mm to 100 mm.

7. Pane according to one of claims 1 through 6, wherein the de-coated lines (4) are arranged outside the A-field of view (7).

8. Pane according to one of claims 1 through 7, wherein the pane (1, 1.1, 1.2) or the single pane (1') contains glass, preferably flat glass, float glass, quartz glass, borosilicate glass, soda lime glass, or polymers, preferably polyethylene, polypropylene, polycarbonate, polymethyl methacrylate, and/or mixtures thereof.

9. Pane according to one of claims 1 through 8, wherein the pane (1, 1.1, 1.2) or the single pane (1') has a permittivity number from 2 to 8 and preferably from 6 to 8.

10. Pane according to one of claims 1 through 9, wherein the transparent, electrically conductive coating (3) contains at least one metal, preferably silver, nickel, chromium, niobium, tin, titanium, copper, palladium, zinc, gold, cadmium, aluminum, silicon, tungsten, or alloys thereof, and/or at least one metal oxide layer, preferably tin-doped indium oxide (ITO), aluminum-doped zinc oxide (AZO), fluorine-doped tin oxide (FTO, SnO₂:F), antimony-doped tin oxide (ATO, SnO₂:Sb), and/or carbon nanotubes and/or optically transparent, electrically conductive polymers, preferably poly(3, 4-ethylene dioxythiophenes), polystyrene sulfonate, poly(4,4-dioctylcylopentadithiophene), 2,3-dichloro-5,6-dicyano-1,4-benzoquinone, mixtures, and/or copolymers thereof.

11. Pane according to one of claims 1 through 10, wherein the transparent, electrically conductive coating (3) has a sheet resistance of 0.5 ohm/square to 200 ohm/square, preferably 0.7 ohm/square to 30 ohm/square.

12. Method for producing a pane (10) according to one of claims 1 and 3 through 11, wherein at least:
a. the transparent, electrically conductive coating (3) is applied on the inner side (II) of the first pane (1.1), the inner side (III) of the second pane (1.2), and/or on at least one side (V, VI) of the intermediate layer (2),
b. lines (4) are introduced in the transparent, electrically conductive coating (3) by laser patterning, and
c. the first pane (1.1), the intermediate layer (2), and the second pane (1.2) are laminated to each other.

13. Method for producing a pane (10') according to one of claims 2 through 11, wherein at least:
a. the transparent, electrically conductive coating (3) is applied on the outer side (I) and/or the inner side (IV) of the single plane (1'),
b. lines (4) are introduced in the transparent, electrically conductive coating (3) by laser patterning.

14. Use of a pane according to one of claims 1 through 11 as a single plane or composite pane in a motor vehicle by or a motor vehicle door of a means of transportation on land, on water, or in the air, preferably as a windshield, in buildings as part of an external façade or a building window and/or as a built-in part in furniture and devices.

## Revendications

1. Vitre (10) comprenant :
- au moins une première vitre (1.1), une couche intermédiaire (2), une seconde vitre (1.2) ; et
- au moins un revêtement transparent (3), conducteur de l'électricité, qui est disposé entre la couche intermédiaire (2) et la première vitre (1.1) et/ou entre la couche intermédiaire (2) et la seconde vitre (1.2),
dans laquelle
- le revêtement transparent (3), conducteur de l'électricité, comprend au moins une région (9) qui présente au moins deux lignes dénudées (4) disposées à peu près parallèlement ;
- entre des lignes (4) voisines, il ne se trouve pas d'autres lignes et est ménagé un espacement vertical d de 9,5 mm à 30,5 mm ; et
- les lignes (4) ont une largeur b de 0,19 mm à 0,41 mm et une longueur I de 20 mm à 150 mm.

2. Vitre (10') comprenant:
- une vitre simple (1') possédant une face extérieure (I) et une face intérieure (IV) ; et
- au moins un revêtement transparent (3), conducteur de l'électricité, qui est disposé sur la face extérieure (I) et/ou sur la face intérieure (IV),
dans laquelle
- le revêtement transparent (3), conducteur de l'électricité, comprend au moins une région (9) qui présente au moins deux lignes dénudées (4) disposées à peu près parallèlement ;
- entre des lignes (4) voisines, il ne se trouve pas d'autres lignes, et est ménagé un espacement vertical d de 9,5 mm à 30,5 mm ; et
- les lignes (4) ont une largeur b de 0,19 mm à 0,41 mm et une longueur I de 20 mm à 150 mm.

3. Vitre selon l'une des revendications 1 et 2, dans laquelle les lignes dénudées (4) sont disposées horizontalement ou verticalement.

4. Vitre selon l'une des revendications 1 à 3, dans laquelle la surface des régions (9) représente une fraction de 7 % à 25 % de la surface de la vitre (10, 10').

5. Vitre selon l'une des revendications 1 à 4, dans laquelle le revêtement transparent (3), conducteur de l'électricité, présente au moins cinq régions (9) ayant chacune au moins sept lignes dénudées (4).

6. Vitre selon l'une des revendications 1 à 5, dans laquelle l'espacement horizontal h entre deux régions (9) voisines est de 9,5 mm à 100 mm.

7. Vitre selon l'une des revendications 1 à 6, dans laquelle les lignes dénudées (4) sont disposées en dehors du champ de vision A (7).

8. Vitre selon l'une des revendications 1 à 7, dans laquelle la vitre (1, 1.1, 1.2) ou la vitre simple (1') contient du verre, de préférence du verre plat, du verre flotté, du verre de quartz, du verre au borosilicate, du verre sodocalcique, ou des polymères, de préférence du polyéthylène, du polypropylène, du polycarbonate, du poly(méthacrylate de méthyle) et/ou des mélanges de ceux-ci.

9. Vitre selon l'une des revendications 1 à 8, dans laquelle la vitre (1, 1.1, 1.2) ou la vitre simple (1') présente un coefficient de permittivité de 2 à 8 et de préférence de 6 à 8.

10. Vitre selon l'une des revendications 1 à 9, dans laquelle le revêtement transparent (3), conducteur de l'électricité, contient au moins un métal, de préférence de l'argent, du nickel, du chrome, du niobium, de l'étain, du titane, du cuivre, du palladium, du zinc, de l'or, du cadmium, de l'aluminium, du silicium, du tungstène ou des alliages de ceux-ci, et/ou au moins une couche d'oxyde métallique, de préférence d'oxyde d'indium dopé à l'étain (ITO), d'oxyde de zinc dopé à l'aluminium (AZO), d'oxyde d'étain dopé au fluor (FTO, SnO₂:F), d'oxyde d'étain dopé à l'antimoine (ATO, SnO₂:Sb) et/ou des nanotubes de carbone et/ou des polymères optiquement transparents, conducteurs de l'électricité, de préférence du poly(3,4-éthylène dioythiophène), du poly(sulfonate de styrène), du poly (4,4-dioctylcyclopentadithiophène), de la 2,3-dichloro-5,6-dicyano-1,4-benzoquinone, et des mélanges et/ou copolymères de ceux-ci.

11. Vitre selon l'une des revendications 1 à 10, dans laquelle le revêtement transparent (3), conducteur de l'électricité, présente une résistance surfacique de 0,5 ohm par carré à 200 ohms par carré, de préférence de 0,7 ohm par carré à 30 ohms par carré.

12. Procédé de fabrication d'une vitre (10) selon l'une des revendications 1 et 3 à 11, dans lequel au moins :
a. le revêtement transparent (3), conducteur de l'électricité, est appliqué sur la face intérieure (II) de la première vitre (1.1), sur la face intérieure (III) de la seconde vitre (1.2) et/ou sur au moins une face (V, VI) de la couche intermédiaire (2) ;
b. des lignes (4) sont formées par structuration au laser dans le revêtement transparent (3) conducteur de l'électricité ; et
c. la première vitre (1.1), la couche intermédiaire (2) et la seconde vitre (1.2) sont laminées entre elles.

13. Procédé de fabrication d'une vitre (10') selon l'une des revendications 2 à 11, dans lequel au moins :
a le revêtement transparent (3) conducteur de l'électricité est appliqué sur la face extérieure (I) et/ou sur la face intérieure (IV) de la vitre simple (') ;
b. des lignes (4) sont formées par structuration au laser dans le revêtement transparent (3), conducteur de l'électricité.

14. Utilisation d'une vitre selon l'une des revendications 1 à 11 comme vitre simple ou vitre composite, dans une carrosserie de véhicule ou dans une porte de véhicule d'un moyen de transport terrestre, naval ou aérien, de préférence comme pare-brise, dans des bâtiments, en tant que partie d'une façade extérieure ou d'une fenêtre de bâtiment et/ou en tant qu'élément de meubles et d'appareils.
